# EUROPEAN PATENT APPLICATION

(11) **EP 4 775 517 A1**
(43) Date of publication of application: **15.07.2026**
(21) Application number: 26150473.2
(22) Date of filing: 07.01.2026
(51) Int. Cl.: B65H 3/24, B65H 1/06

(54) **ANGLED SPINNING CARD PICKER**

(30) Priority: 10.01.2025 US 202519015954
(71) Applicant: ASSA ABLOY AB, 107 23 Stockholm (SE)
(72) Inventor: Mork, Patrick, St. Louis Park, 55416 (US); Gorton, Jason, Minneapolis, 55407 (US)
(74) Representative: DTS Patent- und Rechtsanwälte PartmbB

(57) **Abstract**

Systems, devices, methods, and machine-readable media configured to dispense cards for card printing are provided. A card feeder (200) can include a base (220) including a first major top surface, an angled card picker (232) situated in the base and including a protrusion (226) extending therefrom, the angled card picker including a second major top surface, the second major top surface forming an angle between one and thirty degrees relative to the first major top surface, and a gate (230) configured to allow a bottom most card (118) of a stack of cards to pass therethrough when pushed by the protrusion.

## Description

### BACKGROUND

Many card supply mechanisms (sometimes called hoppers) are used for card printing. The hoppers include mechanisms that feed cards into a card printing machine. The hoppers are designed to hold cards in a vertical stack configuration. Most of the hoppers pull the card using rollers, and send the cards, from the bottom, into the card printing machine.

### BRIEF DESCRIPTION OF THE DRAWINGS

FIG. 1 illustrates, by way of example, a high-level diagram of an embodiment of a card printing system.
FIG. 2 illustrates, by way of example, a perspective view diagram of an embodiment of an improved card feeder.
FIG. 3 illustrates, by way of example, the improved card feeder of FIG. 2 with the bottom card being fed into the printer through the gate.
FIG. 4 illustrates, by way of example, a side view diagram of the improved card feeder of FIG. 2.
FIG. 5 illustrates, by way of example, a side view diagram of the improved card feeder of FIG. 2.
FIG. 6 illustrates, by way of example, a side view diagram of the improved card feeder that includes a direct drive motor.
FIG. 7 illustrates, by way of example, a flow diagram of an embodiment of a method of using the improved card feeder.
FIG. 8 illustrates, by way of example, a diagram of an embodiment of a method of making the improved card feeder.
FIG. 9 is a block schematic diagram of a computer system to perform voice inference, and for performing methods and algorithms according to example embodiments.

### DETAILED DESCRIPTION

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized, and that structural, logical and electrical changes may be made without departing from the scope of the present invention. The following description of example embodiments is, therefore, not to be taken in a limited sense, and the scope of the present invention is defined by the appended claims.

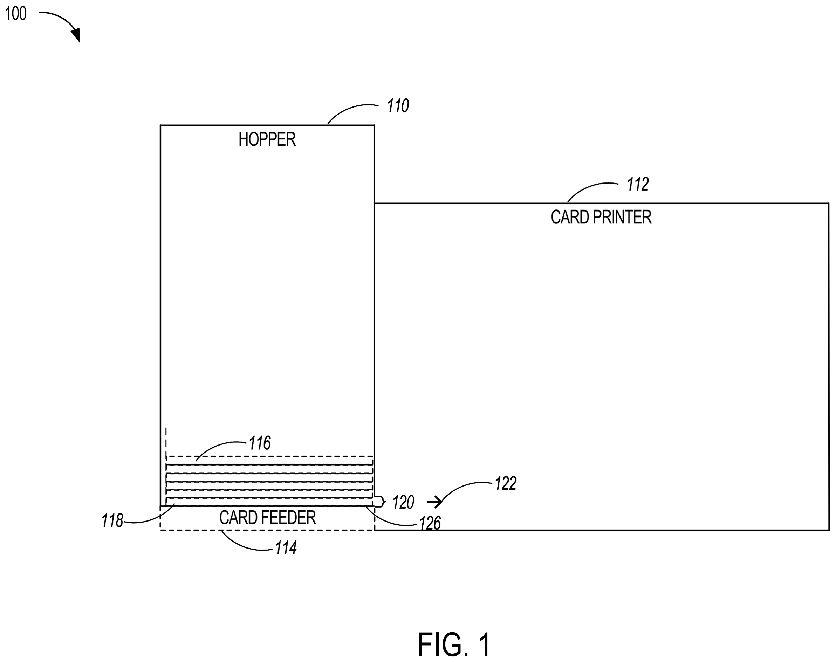

FIG. 1 illustrates, by way of example, a high-level diagram of an embodiment of a card printing system 100. The card printing system 100 as illustrated includes a hopper 110 and a card printer 112. The hopper 110 holds a stack of cards 116, 118 in a consistent orientation. The dimensions of the hopper 110 are such that the cards 116, 118 are forced to stack on top of each other in a same, consistent orientation.

A card feeder 114 (sometimes called a "card pusher assembly") moves the bottom card 118 into the card printer 112. The card feeder 114 typically includes a motor, camming device, a pusher mechanism, a combination thereof, or the like. The card feeder 114 produces enough force to push the bottom card 118 through a gate 120, in a direction indicated by arrow 122. The card printer 112 receives the bottom card 118 and prints, like an inkjet printer, onto the card. The card printer 112 then ejects a printed card through an output port. The output port and inner workings of the card printer 112 are not illustrated.

As more and more cards are placed on the stack of cards, 116, 118 in the hopper 110, the overall weight on the bottom card 118 increases. The weight on the bottom card 118 creates at least two issues. First, the motor torque (of a motor of the card feeder 114) required to push out the bottom card 118 goes up. Second, the sliding friction of the bottom card 118 increases, resulting in an increased chance of the bottom card 118 getting scratched from a bottom card 118 to other card interaction as well as the bottom card 118 to hopper 110 base 126 interaction. Further, cards with certain types of coatings (e.g., polyester) tend to stick to cards of the same material and are not only difficult to slide apart but also tend to scratch more, due to the sharp edges of the cards.

To reduce card scratching issues, reduce the chances of cards sticking to one another, or reduce the changes of other general feeding issues, fewer cards are typically put into the hopper 110. With fewer cards in the hopper 110, the cards in the hopper 110 need to be replaced more often. Often times, the hopper 110 will be out of cards before they are replenished, thus reducing card printer 112 throughput.

For a conventional roller-based card picking system there needs to be a weight on top of the card that is going to be fed. This weight is usually added by way of a spring-loaded mechanism or a passive weight in the roller-based card picking systems. This is because the roller-based card picking system relies on a coefficient of friction between a roller and the card 118 to start the card moving into the printer 112. When the stack is very small, there is a low mass acting on the roller, thus there is a small amount of friction on the roller. This is why the spring or mass is added to provide additional downward force, to make sure there is always enough friction on the roller to feed the card. This is similar to putting sandbags in the back of a truck for more grip in winter months. Since the coefficient of friction is variable throughout the stack of cards, and environment variables can also change this relationship, the extra mass/force of the spring-loaded mechanism or passive weight is used to make the system reliable.

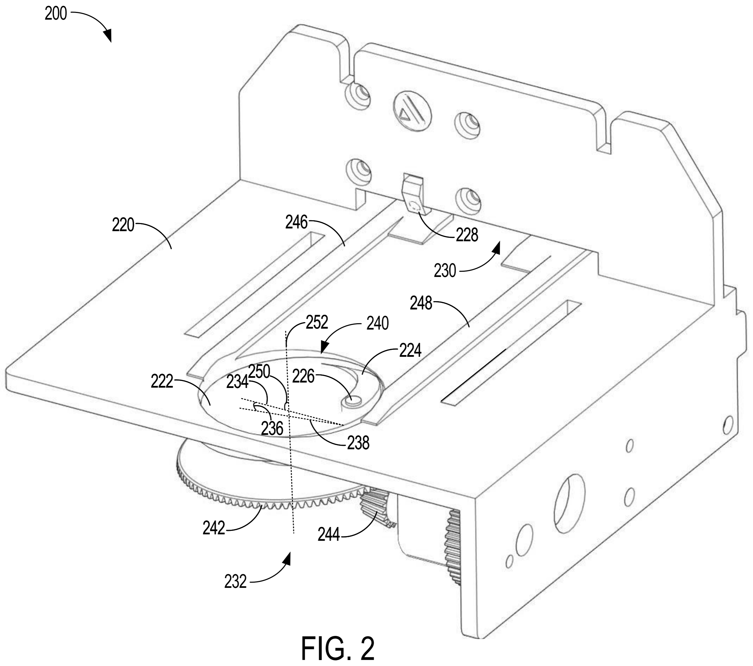

An improved card hopper of FIGS. 2-9 reduces or eliminates scratches on a card 118 that can occur from card to card interactions. The card to card interactions occur as the bottom card 118 in the hopper slides towards a card supply output gate 120. The improved card hopper also reduces the force required to push a card out of the hopper, thus resulting in a reduced motor power requirement, reduced motor cost, and a hopper that can hold a greater amount of cards without scratching the bottom card.

An embodiment includes physically grabbing, by a protrusion on a spinning, angled disk, the back edge of the card. The grabbing removes a reliance on a weight or spring force, such that the weight or spring force is no longer needed for reliability. Embodiments thus make the system more reliable at picking in low card stack situations and reduce the variability and unpredictability of the friction force in card feeding. Embodiments also eliminates parts reducing complexity and cost as compared to the conventional roller-based picking systems.

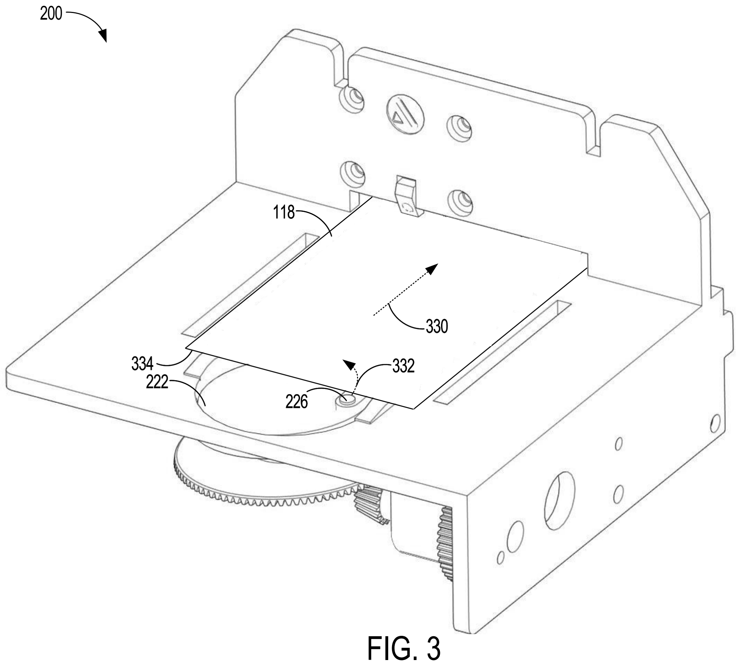

FIG. 2 illustrates, by way of example, a perspective view diagram of an embodiment of an improved card feeder 200. The perspective view provides a view of the improved card feeder 200 that includes a card feeder assembly 232 (sometimes called a "card picker assembly", or "card picker") that pushes a card (see FIG. 3) through a gate 230 and into a card printer. The card feeder 200 includes a base 220 on which the bottom card 118 of a stack of cards sits. The base 220 includes an opening 240 (e.g., a "hole") therethrough. A portion of the card feeder assembly 232 is situated within the opening 240.

The card feeder assembly 232 as illustrated includes an angled disk 222 and toothed cogs 242, 244. When driven by a motor, the toothed cogs 242, 244 cause the angled disk 222 to rotate in the opening 240. As the angled disk 222 rotates, a ramp 224 on the angled disk 222 slides under the bottom card 118. As the ramp 224 slides under the bottom card 118, the stack of cards 116, 118 lifts off the base 220. The lifting of the stack of cards 116, 118 helps break edge attachments and stiction between cards. The ramp 224 extends away from the top major surface of the angled disk 222. A height of the ramp 224 (a distance the ramp 224 extends past the top major surface of the angled disk 222) can increase from a point on the angled disk to the protrusion 226.

As the card 118 slides up the ramp 224, friction force is increased on the bottom card 118. The friction force is increased prior to getting to a protrusion 226. This acts like slipping the clutch in a manual transmission so the car does not peel out, giving the tires better grip and starting the motion slowly. While the protrusion 226 provides a majority of the force for feeding the card 118, the increase in friction provided by the ramp 224 helps in reliability. Conversely, in a roller-based system, the amount of friction is paramount in moving the card 118 to the printer 112. Under the right conditions sufficient friction is not realized, which is similar to dumping the clutch in the manual transmission example. When the amount of friction causes a failure in feeding a card. As the angled disk 222 rotates, a protrusion 226 on the angled disk 222 contacts the bottom card 118. As the angled disk 222 rotates further, the bottom card 118 is pushed, by the protrusion 226, towards the gate 230. The protrusion 226, as it rotates, pushes the bottom card 118 a sufficient distance to contact rollers or another feeding mechanism in the card printer 112. Then, as the angled disk 222 rotates further, the protrusion 226 recesses below skid plates 246, 248 of the base 220. In some embodiments, the protrusion 226 can recess into the opening 240. Then, as the angled disk 222 continues to rotate further, the protrusion 226 and the ramp 224 become exposed above the skid plates 246, 248. The ramp 224 and the protrusion 226 become exposed above the skid plates 246, 248 they contact the next bottom card of the stack of cards.

To achieve the described action of the angled disk 222, a first top major surface of the angled disk 222 (the surface of the angled disk 222 facing the stack of cards) is angled relative to a corresponding second top major surface of the base 220 (the surface of the base 220 facing the stack of cards). The angle between the first and second top major surfaces allows the protrusion 226 to push an edge of the bottom card (sometimes called a "bottom most card") into the gate 230 and then drop below the skid plates 246, 248 so as to not contact a next card in the stack as the protrusion rotates further. The angle between the first and second top major surfaces can be between one and thirty degrees. This configuration reduces card scratching and motor torque as compared to a non-angled design or a roller-feeder mechanism.

The angled disk 222, in pushing the bottom card through the gate 230 and into the printer 112, rotates about an axis 252. The axis 252 is not perpendicular with the major top surface of the base 220. Instead, the axis 252 forms an angle 250 with the base of less than 90 degrees. In some embodiments, the axis 252 forms an angle 250 with a top major surface of the base 220 of between one and thirty degrees. A dashed line 234 represents a line within a plane of the top major surface of the base 220. Another dashed line 238 represents a plane of the top major surface of the angled disk 222. The lines form a non-zero angle 236. Said another way, the angled disk 222 rotates in a plane that is neither parallel nor perpendicular to the plane of the top major surface of the base 220.

The cog 242 is also angled relative to the base 220. The cog 244 has an exterior surface that matches the angle so that teeth of the cogs 242, 244 mate. Then, as a motor spins the cog 244, the cog 242 is spun by way of the interacting teeth.

A card limiter 228 extends into the gate 230. The card limiter 228 is sized to allow only a single card through the gate 230 at a time. The card limiter 228 is optional and helps ensure that only a single card is fed into the printer 112 at a time. It is possible that the ramp 224 is insufficient to break the connections between all the cards. The card limiter 228 is positioned and sized to prevent any cards stuck to a bottom card from being pushed into the printer 112 by the protrusion 226 on the angled disk 222.

The protrusion 226 can include a variety of shapes and dimensions. The protrusion 226 as illustrated is generally circular in cross-section, but can be polygonal, elliptical, or the like in cross-section. The top of the protrusion 226 can be rounded so as to reduce a chance that the protrusion 226 scratches the card 118.

FIG. 3 illustrates, by way of example, the improved card feeder 200 of FIG. 2 with the bottom card 118 being fed into the printer 112 through the gate 230 (see FIG. 2). As the angled disk 222 rotates (counter-clockwise as indicated by arrow 332 in the example of FIG. 3), the protrusion 226 contacts a trailing edge 334 of the bottom card 118. The rotation of the protrusion 226 forces the card 118 to move into the printer 112 as indicated by arrow 330.

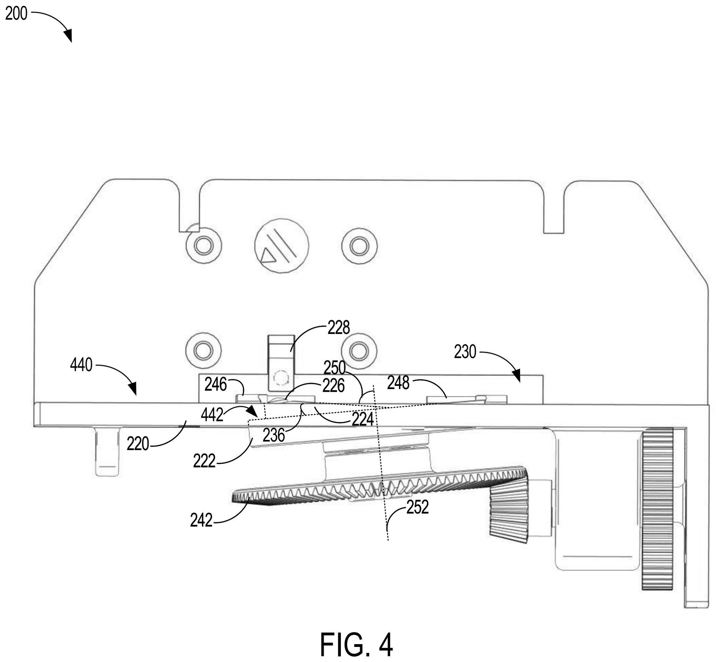

FIG. 4 illustrates, by way of example, a side view diagram of the improved card feeder 200 of FIG. 2. In the side view, the angle 250 between a top major surface 440 of the base 220 and the axis 252 of rotation of the angled disk is apparent. Also, in the sideview, the angle 236 between a top major surface 442 of the angled disk 222 and the top major surface 440 of the base 220 is apparent. The cog 242 can be integrally formed with the angled disk 222 or separately mechanically coupled to the angled disk 222.

In the view of FIG. 4, the angled disk 222 is oriented with the protrusion 226 at its lowest point relative to the base 220. The protrusion 226, at its lowest point, is recessed below respective top surfaces of the skid plates 246, 248. This allows the angled disk 222, at and around its lowest point in the rotation, to rotate without friction or other force between the bottom card 118 and the ramp 224, the protrusion 226, or a combination thereof.

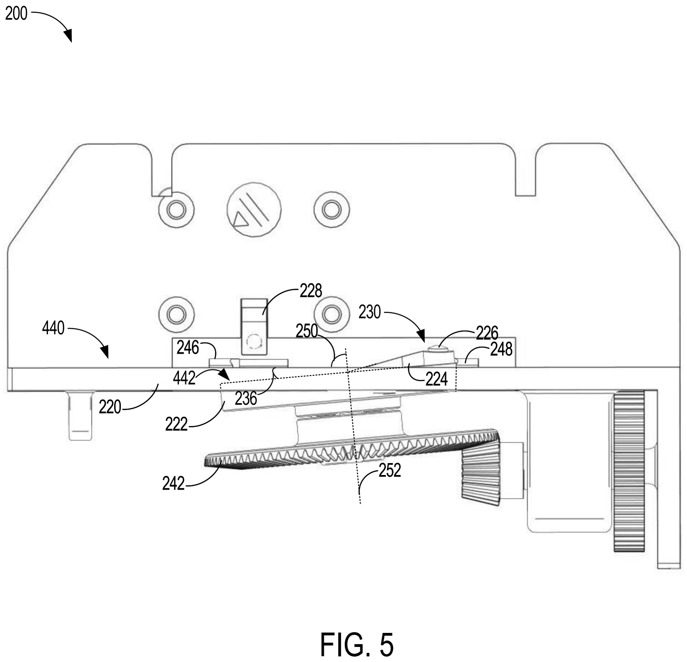

FIG. 5 illustrates, by way of example, a side view diagram of the improved card feeder 200 of FIG. 2. In the side view of FIG. 5, the angled disk 222 is oriented with the protrusion 226 at its highest point relative to the base 220. The protrusion 226, at its highest point, extends above the respective top surfaces of the skid plates 246, 248. This allows the angled disk 222, at and around its highest point in the rotation, to be in contact with the trailing edge 334 of the card 118. The contact with the trailing edge 334 of the card 118 pushes the card 118 through the gate 230 and into the printer 112.

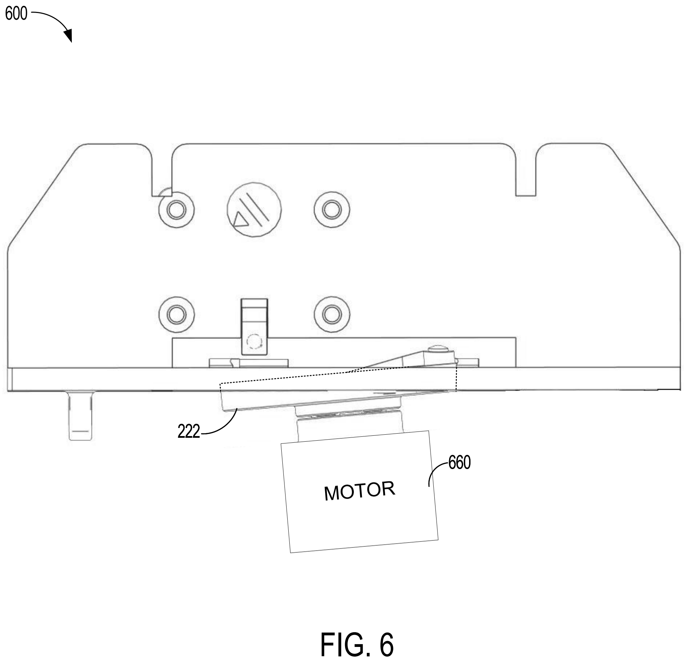

FIG. 6 illustrates, by way of example, a side view diagram of the improved card feeder 600 that includes a direct drive motor 660. Instead of including some cogs, such as the cogs 242, 244 coupled between the motor 660 and the angled disk 222, the motor 660 is directly coupled to the angled disk 222. As the motor 660 rotates, the angled disk 222 rotates with the rotation of the motor 660. The motor 660 can be directly connected to the angled disk 222, such as by a shaft, cotter pin, a keyed shaft and corresponding mating receptacle, a combination thereof, or the like. The motor 660 can be a stepper motor, brushless motor, brushed motor, shunt motor, servo motor, or the like.

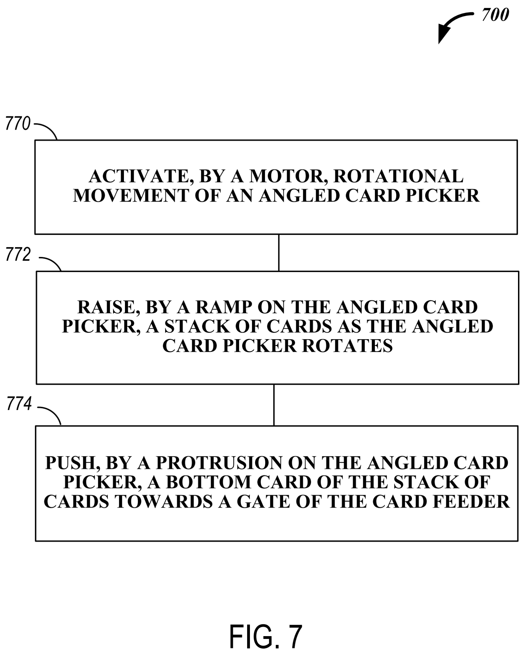

FIG. 7 illustrates, by way of example, a flow diagram of an embodiment of a method 700 of using the improved card feeder 200. The method 700 as illustrated includes activating, by a motor, rotational movement of an angled card picker, at operation 770; raising, by a ramp on the angled card picker, a stack of cards as the angled card picker rotates, at operation 772; and pushing, by a protrusion on the angled card picker, a bottom card of the stack of cards towards a gate of the card feeder, at operation 774.

The protrusion can be on the ramp. The rotational movement of the angled card picker can rotate the angled card picker about a rotational axis that forms an angle of between one and thirty degrees with a plane of a top major surface of a base of the card feeder. The base can include skid plates extending therefrom over which a bottom most card of a stack of cards slides towards the gate.

The protrusion can extend beyond respective top surfaces of the skid plates at a first point in the rotational movement of the angled card picker. The protrusion can be recessed below the top surface of the skid plates at a second different point in the rotation of the angled card picker. The method 700 can further include stopping, by a card limiter extending into the gate, a second card of the stack of cards from traveling through the gate, the second card in direct contact with the bottom card. The motor can turn a toothed cog mechanically coupled to the angled card picker.

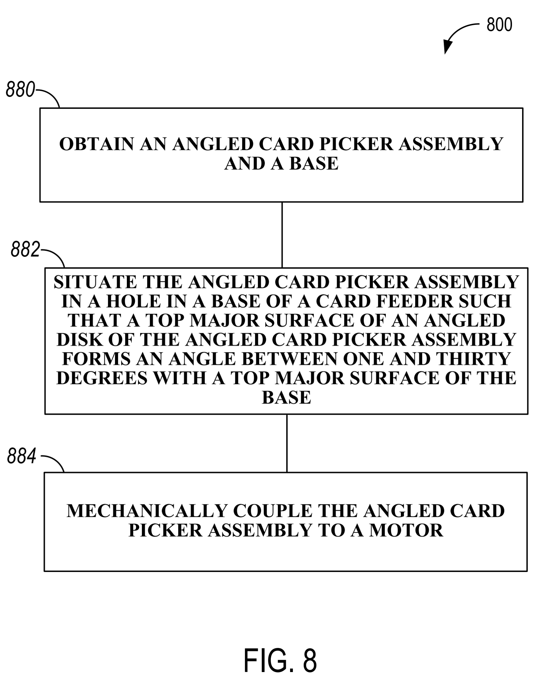

FIG. 8 illustrates, by way of example, a diagram of an embodiment of a method 800 of manufacturing the improved card feeder 200. The method 800 as illustrated includes obtaining an angled card picker assembly and a base, at operation 880; situating the angled card picker assembly in a hole in a base of a card feeder such that a top major surface of an angled disk of the angled card picker assembly forms an angle between one and thirty degrees with a top major surface of the base, at operation 882; and mechanically coupling the angled card picker assembly to a motor, at operation 884.

The angled card picker assembly can include a ramp extending away from the top major surface of the angled card picker assembly. The angled card picker assembly can include a protrusion on and extending away from the ramp. The base can include skid plates extending therefrom. Situating the angled card picker assembly into the hole includes situating the angled card assembly such that the protrusion extends beyond respective top surfaces of the skid plates at a first point in a rotation of the angled card picker assembly and is recessed below the top surface of the skid plates at a second different point in the rotation.

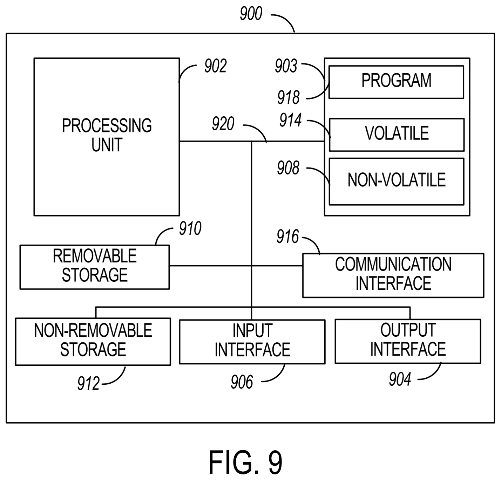

FIG. 9 is a block schematic diagram of a computer system 900 to perform voice inference, and for performing methods and algorithms according to example embodiments. Any of the components or operations of the printer 112, method 800, method 700, or other component or operation can be implemented or facilitated using the system 900 or a component thereof. All components of the system 900 need not be used in various embodiments. For example, the printer 112 can operate using the system 900, manufacturing of the card feeder 200 can be facilitated, such as by three-dimensional (3D) printing, injection molding, or a combination thereof, of all or a portion of the card feeder 200, using the system 900, or use of the card feeder 200 can be facilitated using the system 900 to control a motor or other card feeding mechanism of the card feeder 200.

One example computing device in the form of a computer 900 may include a processing unit 902, memory 903, removable storage 910, and non-removable storage 912. Although the example computing device is illustrated and described as computer 900, the computing device may be in different forms in different embodiments. For example, the computing device may instead be a smartphone, a tablet, smartwatch, smart storage device (SSD), or other computing device including the same or similar elements as illustrated and described with regard to FIG. 9. Devices, such as smartphones, tablets, and smartwatches, are generally collectively referred to as mobile devices or user equipment.

Although the various data storage elements are illustrated as part of the computer 900, the storage may also or alternatively include cloud-based storage accessible via a network, such as the Internet or server-based storage. Note also that an SSD may include a processor on which the parser may be run, allowing transfer of parsed, filtered data through I/O channels between the SSD and main memory.

Memory 903 may include volatile memory 914 and non-volatile memory 908. Computer 900 may include - or have access to a computing environment that includes - a variety of computer-readable media, such as volatile memory 914 and non-volatile memory 908, removable storage 910 and non-removable storage 912. Computer storage includes random access memory (RAM), read only memory (ROM), erasable programmable read-only memory (EPROM) or electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions.

Computer 900 may include or have access to a computing environment that includes input interface 906, output interface 904, and a communication interface 916. Output interface 904 may include a display device, such as a touchscreen, that also may serve as an input device. The input interface 906 may include one or more of a touchscreen, touchpad, mouse, keyboard, camera, one or more device-specific buttons, one or more sensors integrated within or coupled via wired or wireless data connections to the computer 900, and other input devices. The computer may operate in a networked environment using a communication connection to connect to one or more remote computers, such as database servers. The remote computer may include a personal computer (PC), server, router, network PC, a peer device or other common data flow network switch, or the like. The communication connection may include a Local Area Network (LAN), a Wide Area Network (WAN), cellular, Wi-Fi, Bluetooth, or other networks. According to one embodiment, the various components of computer 900 are connected with a system bus 920.

Computer-readable instructions stored on a computer-readable medium are executable by the processing unit 902 of the computer 900, such as a program 918. The program 918 in some embodiments comprises software to implement one or more methods described herein. A hard drive, CD-ROM, and RAM are some examples of articles including a non-transitory computer-readable medium such as a storage device. The terms computer-readable medium, machine readable medium, and storage device do not include carrier waves or signals to the extent carrier waves and signals are deemed too transitory. Storage can also include networked storage, such as a storage area network (SAN). Computer program 818 may be used to cause processing unit 902 to perform one or more methods or algorithms described herein.

### Examples and additional notes

Example 1 includes a card feeder comprising a base including a first major top surface, an angled card picker situated in the base and including a protrusion extending therefrom, the angled card picker including a second major top surface, the second major top surface forming an angle between one and thirty degrees relative to the first major top surface, and a gate configured to allow a bottom most card of a stack of cards to pass therethrough when pushed by the protrusion.

In Example 2, Example 1 further includes skid plates extending from the first major top surface.

In Example 3, Example 2 further includes, wherein the protrusion extends beyond respective top surfaces of the skid plates at a first point in a rotation of the angled card picker and is recessed below the respective top surfaces of the skid plates at a second different point in the rotation of the angled card picker.

In Example 4 at least one of Examples 1-3 further includes, wherein the angled card picker further includes a ramp extending away from the second major top surface.

In Example 5, Example 4 further includes, wherein the protrusion is situated on the ramp and extends away from the ramp.

In Example 6, at least one of Examples 4-5 further includes, wherein a height of the ramp increases from a point on the angled card picker to the protrusion.

In Example 7, at least one of Examples 1-6 further includes a toothed cog mechanically coupled to the angled card picker.

In Example 8, Example 7 further includes, wherein the toothed cog includes a third major top surface generally parallel with the second major top surface.

In Example 9, at least one of Examples 1-8 further includes a card limiter extending into the gate, the card limiter situated to prevent more than a single card at a time to traverse through the gate.

Example 10 includes a method of using a card feeder comprising activating, by a motor, rotational movement of an angled card picker, raising, by a ramp on the angled card picker, a stack of cards as the angled card picker rotates, and pushing, by a protrusion on the angled card picker, a bottom card of the stack of cards towards a gate of the card feeder.

In Example 11, Example 10 further includes, wherein the protrusion is on the ramp.

In Example 12, at least one of Examples 10-11 further includes, wherein the rotational movement of the angled card picker rotates the angled card picker about a rotational axis that forms an angle of between one and thirty degrees with a plane of a top major surface of a base of the card feeder.

In Example 13, Example 12 further includes, wherein the base includes skid plates extending therefrom over which a bottom most card of a stack of cards slides towards the gate.

In Example 14, Example 13 further includes, wherein the protrusion extends beyond respective top surfaces of the skid plates at a first point in the rotational movement of the angled card picker and is recessed below the top surface of the skid plates at a second different point in the rotation of the angled card picker.

In Example 15, at least one of Examples 10-14 further includes stopping, by a card limiter extending into the gate, a second card of the stack of cards from traveling through the gate, the second card in direct contact with the bottom card.

In Example 16, at least one of Examples 10-15 further includes, wherein the motor turns a toothed cog mechanically coupled to the angled card picker.

Example 17 includes a method of making a card feeder comprising obtaining an angled card picker assembly and a base, situating the angled card picker assembly in a hole in a base of a card feeder such that a top major surface of an angled disk of the angled card picker assembly forms an angle between one and thirty degrees with a top major surface of the base, and mechanically coupling the angled card picker assembly to a motor.

In Example 18, Example 17 further includes, wherein the angled card picker assembly includes a ramp extending away from the top major surface of the angled card picker assembly.

In Example 19, Example 18 further includes, wherein the angled card picker assembly includes a protrusion on and extending away from the ramp.

In Example 20, Example 19 further includes, wherein the base includes skid plates extending therefrom, and situating the angled card picker assembly into the hole includes situating the angled card assembly such that the protrusion extends beyond respective top surfaces of the skid plates at a first point in a rotation of the angled card picker assembly and is recessed below the top surface of the skid plates at a second different point in the rotation.

The functions or algorithms described herein may be implemented in software in one embodiment. The software may consist of computer executable instructions stored on computer readable media or computer readable storage device such as one or more non-transitory memories or other type of hardware-based storage devices, either local or networked. Further, such functions correspond to modules, which may be software, hardware, firmware or any combination thereof. Multiple functions may be performed in one or more modules as desired, and the embodiments described are merely examples. The software may be executed on a digital signal processor, ASIC, microprocessor, or other type of processor operating on a computer system, such as a personal computer, server or other computer system, turning such computer system into a specifically programmed machine. Thus, a module can include software, hardware that executes the software or is configured to implement a function without software, firmware, or a combination thereof.

The functionality can be configured to perform an operation using, for instance, software, hardware, firmware, or the like. For example, the phrase "configured to" can refer to a logic circuit structure of a hardware element that is to implement the associated functionality. The phrase "configured to" can also refer to a logic circuit structure of a hardware element that is to implement the coding design of associated functionality of firmware or software. The term "module" refers to a structural element that can be implemented using any suitable hardware (e.g., a processor, among others), software (e.g., an application, among others), firmware, or any combination of hardware, software, and firmware. The term, "logic" encompasses any functionality for performing a task. For instance, each operation illustrated in the flowcharts corresponds to logic for performing that operation. An operation can be performed using, software, hardware, firmware, or the like. The terms, "component," "system," and the like may refer to computer-related entities, hardware, and software in execution, firmware, or combination thereof. A component may be a process running on a processor, an object, an executable, a program, a function, a subroutine, a computer, or a combination of software and hardware. The term, "processor," may refer to a hardware component, such as a processing unit of a computer system.

Furthermore, the claimed subject matter may be implemented as a method, apparatus, or article of manufacture using standard programming and engineering techniques to produce software, firmware, hardware, or any combination thereof to control a computing device to implement the disclosed subject matter. The term, "article of manufacture," as used herein is intended to encompass a computer program accessible from any computer-readable storage device or media. Computer-readable storage media can include, but are not limited to, magnetic storage devices, e.g., hard disk, floppy disk, magnetic strips, optical disk, compact disk (CD), digital versatile disk (DVD), smart cards, flash memory devices, among others. In contrast, computer-readable media, i.e., not storage media, may additionally include communication media such as transmission media for wireless signals and the like.

Although a few embodiments have been described in detail above, other modifications are possible. For example, the logic flows depicted in the figures do not require the particular order shown, or sequential order, to achieve desirable results. Other steps may be provided, or steps may be eliminated, from the described flows, and other components may be added to, or removed from, the described systems. Other embodiments may be within the scope of the following claims.

## Claims

1. A card feeder comprising:
a base including a first major top surface;
an angled card picker situated in the base and including a protrusion extending therefrom, the angled card picker including a second major top surface, the second major top surface forming an angle between one and thirty degrees relative to the first major top surface; and
a gate configured to allow a bottom most card of a stack of cards to pass therethrough when pushed by the protrusion.

2. The card feeder of claim 1, further comprising skid plates extending from the first major top surface.

3. The card feeder of claim 2, wherein the protrusion extends beyond respective top surfaces of the skid plates at a first point in a rotation of the angled card picker and is recessed below the respective top surfaces of the skid plates at a second different point in the rotation of the angled card picker.

4. The card feeder of one of claims 1-3, wherein the angled card picker further includes a ramp extending away from the second major top surface.

5. The card feeder of claim 4, wherein the protrusion is situated on the ramp and extends away from the ramp.

6. The card feeder of one of claims 4-5, wherein a height of the ramp increases from a point on the angled card picker to the protrusion.

7. The card feeder of one of claims 1-6, further comprising a toothed cog mechanically coupled to the angled card picker.

8. The card feeder of claim 7, wherein the toothed cog includes a third major top surface generally parallel with the second major top surface.

9. The card feeder of one of claims 1-8, further comprising a card limiter extending into the gate, the card limiter situated to prevent more than a single card at a time to traverse through the gate.

10. A method of using a card feeder comprising:
activating, by a motor, rotational movement of an angled card picker;
raising, by a ramp on the angled card picker, a stack of cards as the angled card picker rotates; and
pushing, by a protrusion on the angled card picker, a bottom card of the stack of cards towards a gate of the card feeder.

11. The method of claim 10, wherein the protrusion is on the ramp.

12. The method of one of claims 10-11, wherein the rotational movement of the angled card picker rotates the angled card picker about a rotational axis that forms an angle of between one and thirty degrees with a plane of a top major surface of a base of the card feeder.

13. The method of claim 12, wherein the base includes skid plates extending therefrom over which a bottom most card of a stack of cards slides towards the gate.

14. The method of claim 13, wherein the protrusion extends beyond respective top surfaces of the skid plates at a first point in the rotational movement of the angled card picker and is recessed below the top surface of the skid plates at a second different point in the rotation of the angled card picker.

15. The method of one of claims 10-14, further comprising stopping, by a card limiter extending into the gate, a second card of the stack of cards from traveling through the gate, the second card in direct contact with the bottom card.
